# EUROPÄISCHE PATENTSCHRIFT

(11) **EP 0 927 877 B1**
(45) Veröffentlichungstag und Bekanntmachung des Hinweises auf die Patenterteilung: **21.04.2004**
(21) Anmeldenummer: 98122608.7
(22) Anmeldetag: 27.11.1998
(51) Int. Cl.: G01F 23/26

(54) **Messvorrichtung für eine Kraftstoffanzeige**
A measuring device for a fuel gauge
Dispositif de mesure pour une jauge carburant

(30) Priorität: 02.01.1998 DE 19800054
(43) Veröffentlichungstag der Anmeldung: 07.07.1999
(73) Patentinhaber: Volkswagen Aktiengesellschaft, 38436 Wolfsburg (DE)
(72) Erfinder: Rossmann, Werner, 38446 Wolfsburg (DE); Brüggebors, Heinz, 31303 Burgdorf (DE); Rathfelder, Jörg, 38440 Wolfsburg (DE)
(74) Vertreter: Banzer, Hans-Jörg, Dipl.-Ing.

(56) Entgegenhaltungen:
- EP-A- 0 378 304
- DE-C- 19 511 556
- US-A- 4 444 051
- US-A- 4 590 575

## Beschreibung

Die vorliegende Erfindung betrifft eine Meßvorrichtung zum Messen der Füllhöhe in einem Tank für eine Kraftstoffanzeige nach dem Oberbegriff von Anspruch 1.

Eine elektronische Meßvorrichtung für eine Kraftstoffanzeige ist aus DE 38 43 339 bekannt. Die Meßvorrichtung zur Füllstandsmessung nach diesem Stand der Technik arbeitet kapazitiv und umfaßt eine Oszillatorschaltung und eine Meßschaltung mit Meßsonde. Die Messung basiert auf Kapazitätsänderungen in der Meßsonde, die dann auftreten, wenn die Meßsonde in die Füllflüssigkeit eingetaucht wird. Der Aufbau einer kapazitiven Meßsonde ist u. a. aus dem deutschen Gebrauchsmuster G 93 15 389 bekannt.

Der Nachteil der genannten Meßvorrichtung zur Füllstandsmessung ist ihre Abhängigkeit von den elektrischen Eigenschaften der zu messenden Füllflüssigkeit. Daher wurde in DE 29 45 965 eine Kompensationsschaltung zum Kompensieren der Dielektrizitätskonstante unterschiedlicher Flüssigkeiten vorgeschlagen. Die Kompensationsschaltung ist so ausgelegt, daß von dem komplexen Leitwert eines Meßkondensators und eines Kompensationskondensators jeweils nur der Imaginärteil, nicht aber der Realteil berücksichtigt wird. Dazu wird der Ausgang eines Oszillators an jeweils einen ersten Anschluß des Meß- bzw. des Kompensationskondensators angelegt. Die Spannung zwischen dem zweiten Anschluß der Kondensatoren und einem weiteren Wechselpotential werden miteinander verglichen. Die Differenzspannung entspricht dem (komplexen) Widerstands- oder Leitwert der Meßkapazität. Da die Meßkapazität von der Flüssigkeitshöhe abhängt, ist die Differenzspannung ein direktes Maß für den Füllpegel in dem Flüssigkeitstank.

Die Umrechnung der Differenzspannung in eine Füllhöhe erfolgt in einer Auswerteelektronik. Die Differenzspannung ist jedoch i. a. verrauscht und mit einem Meßfehler behaftet, einerseits durch die Temperaturempfindlichkeit der elektronischen Komponenten und andererseits durch den Übertragungsweg zwischen Meßsonde und Auswerteelektronik.

Eine Messvorrichtung gemäß dem Oberbegriff des Anspruches 1 ist beispielsweise aus der US 4,444,051 bekannt. Diese Messvorrichtung umfasst eine Messkapazität und eine Referenzkapazität, denen jeweils ein Impulsgenerator in Form eines astabilen Multivibrators zum Ausgeben einer Messimpulsfolge in Abhängigkeit von der Messkapazität bzw. in Abhängigkeit von der Referenzkapazität zugeordnet ist. Die von den beiden Impulsgeneratoren ausgegebenen Impulsfolgen werden ausgewertet, um ein die Füllhöhe in dem jeweiligen Tank anzeigendes Füllhöhensignal zu erzeugen.

Ähnliche Messvorrichtungen sind auch in der EP 0 378 304 A2 und in der US 4,590,575 beschrieben, wobei bei der erstgenannten Druckschrift die Messkapazität und die Referenzkapazität jeweils durch mehrere voneinander beabstandete Drähte realisiert sind, wobei die die Messkapazität bildenden Drähte in Längsrichtung der Sonde durch einen Isolator von den die Referenzkapazität bildenden Drähten beabstandet sind. Bei der zweitgenannten Druckschrift wird die Messkapazität und die Referenzkapazität zwischen einer jeweiligen Messprobe und der Tankwand ausgebildet. Beiden Druckschriften ist gemeinsam, dass ebenfalls Impulsgeneratoren zum Ausgeben von Impulsfolgen in Abhängigkeit von der Messkapazität bzw. in Abhängigkeit von der Referenzkapazität vorgesehen sind, um davon abhängig ein Füllhöhensignal, welches die Füllhöhe in dem Tank anzeigt, zu erzeugen.

Aus der DE 195 11 556 C1 ist schließlich eine weitere Messvorrichtung zur Bestimmung der Qualität einer Flüssigkeit sowie deren Füllstand in einem Behälter mittels Impedanzmessung bekannt, wobei diese Messvorrichtung einen ersten Sensor mit einem ersten, mit der Flüssigkeit gefüllte Messraum und einen zweiten Sensor mit einem zweiten, mit der Flüssigkeit gefüllte Messraum umfasst. Die beiden Messräume sind durch entsprechende Elektroden gebildet, welche voneinander in Längsrichtung der Messvorrichtung durch entsprechende Isolierkörper beabstandet sind.

Aufgabe der vorliegenden Erfindung ist es, eine Meßvorrichtung für die Kraftstoffmenge in einem Fahrzeugtank zu schaffen, womit ein genaues, weitgehend rauschfreies und zuverlässiges Füllhöhensignal, das der Füllhöhe im Tank entspricht, ausgegeben werden kann und die Meßvorrichtung kostengünstig hergestellt werden kann.

Diese Aufgabe wird gelöst durch eine Meßvorrichtung mit den Merkmalen nach Anspruch 1. Die abhängigen Ansprüche beziehen sich auf bevorzugte Ausführungsformen der Erfindung.

Das Grundprinzip der vorliegenden Erfindung ist es, statt eines mit einem Fehler behafteten statischen Meßwertes, wie z. B. eines (komplexen) Widerstandswertes eines Meßkondensators, eine periodische Meßgröße zugrunde zu legen, womit eine sehr viel höhere Genauigkeit bei der Messung und eine größere Unempfindlichkeit in bezug auf die Übertragung von Meßsignalen erreichbar ist. Dazu wird eine Meßvorrichtung vorgeschlagen, bei der jeweils ein eigener, kapazitiv gesteuerter Impulsgenerator sowohl für den Meß- als auch für den Referenzkondensator vorgesehen ist, so daß zwei unabhängige Pulsfolgen erzeugt werden, deren Frequenzen oder Pulsformen sehr genau miteinander verglichen werden können.

Die erfindungsgemäße Meßvorrichtung zum Messen der Füllhöhe in einem Tank, die eine Meßsonde mit einer Meßkapazität und einer Referenzkapazität und eine mit der Meßsonde verbundene Meßelektronik zum Ausgeben eines Füllhöhensignals, das der Füllhöhe in dem Tank entspricht, umfaßt, ist dadurch gekennzeichnet, daß die Meßelektronik einen ersten Impulsgenerator zum Ausgeben einer Meßimpulsfolge in Abhängigkeit von der Meßkapazität und einen zweiten Impulsgenerator zum Ausgeben einer Referenzimpulsfolge in Abhängigkeit von der Referenzkapazität umfaßt.

Vorzugsweise wird als Impulsgenerator ein astabiler Multivibrator verwendet, dessen eine Kapazität die Meß- bzw. die Referenzkapazität ist. Statt der Frequenz des Ausgangssignals des Impulsgenerators kann auch dessen Pulsform analysiert werden.

In einer weiteren bevorzugten Ausführungsform der Erfindung ist jeweils ein Frequenzteiler zwischen die Meßelektronik der Meßkapazität bzw. der Referenzkapazität und die Steuereinheit geschaltet, damit die Meß- und die Referenzfrequenz kompatibel zur Grenzfrequenz der Steuereinheit gemacht werden kann und damit das übertragene Signal in einen Frequenzbereich verlagert werden kann, in dem es wenig Störeinflüssen im Fahrzeug unterworfen ist.

Vorzugsweise dienen zwei auf derselben Achse angeordnete Rohre als jeweils eine Elektrode des Meß- bzw. Referenzkondensators, während die andere Elektrode von einem Außenrohr gebildet wird, das konzentrisch mit der Meß- und Referenzelektrode angeordnet ist. Insbesondere wird der Abstand zwischen der Meß- und Referenzelektrode und dem Außenrohr mit mindestens einem Abstandshalter definiert. Mit dieser Anordnung läßt sich ein sehr kompakter Aufbau der Meßsonde erreichen, wenn die beiden Impulsgeneratoren, wie erfindungsgemäß vorgeschlagen in die Meßsonde integriert sind. Dadurch können auch kurze Kabel zwischen den Außenkapazitäten und den Impulsgeneratoren verwendet werden, was den Einfluß von eingestrahlten Störungen weiter verringert.

Die Vorteile der erfindungsgemäßen Meßvorrichtung liegen u. a. darin, daß sie einfach zu konstruieren ist und nur ein geringer Hardwareaufwand nötig ist. Insbesondere sind keine beweglichen Teile nötig, wodurch auch sichergestellt ist, daß kein Verschleiß auftreten kann. Des weiteren wird durch die Erfindung eine kompakte Bauweise der Kraftstoffüberwachung im Fahrzeug ermöglicht, und die Kombination mit der Kraftstoffeinheit des Fahrzeugs wird vereinfacht.

Die erfindungsgemäße Meßvorrichtung stellt ein eigenständig kompensierendes System dar, das auch eine Plausibilitätskontrolle ermöglicht und bei unterschiedlichen Kraftstoffen eingesetzt werden kann. Ferner ist die Kalibrierung des Kraftstoffverbrauchs in Abhängigkeit von der Füllhöhe einfach durchführbar, da die jeweilige Tankform des Fahrzeugs über die Steuerungs-Software der elektronischen Meßvorrichtung berücksichtigt werden kann. Außerdem ist die erfindungsgemäße Meßvorrichtung im wesentlichen temperaturunabhängig, da die Referenzmessung die gleiche Temperaturcharakteristik aufweist wie die eigentliche Messung, so daß eine Temperaturdrift der Meßwerte kompensiert werden kann. Die Auflösung des erfindungsgemäßen Gebers ist bis in den unteren Bereich sehr hoch, da die Signalübertragung von dem Meßort zur zentralen Steuereinheit als digital angesehen werden kann (es werden nur Werte über und unter einer vorgegebenen Schwelle berücksichtigt) und damit Störungseinflüsse wie Rauschen und dergleichen weitgehend ausgeschlossen werden können. Außerdem kann insbesondere bei Diesel - Kraftstoff eine Warnung erfolgen, bevor der Tankinhalt auf Null sinkt.

Weitere Merkmale und Vorteile der Erfindung ergeben sich aus der Beschreibung von Ausführungsbeispielen, wobei bezug genommen wird auf die beigefügten Zeichnungen, bei denen:
- Fig. 1: eine Ausführungsform der erfindungsgemäßen Meßvorrichtung zeigt,
- Fig. 2: ein schematisches Blockdiagramm der Meßelektronik der erfindungsgemäßen Meßvorrichtung zeigt,
- Fig. 3: eine schematische Seitenansicht der Meßsonde mit der integrierten Meßelektronik in einem Fahrzeugtank zeigt,
- Fig. 4: den Querschnitt der Meßsonde entlang der Linie A-A in Fig. 3 zeigt.

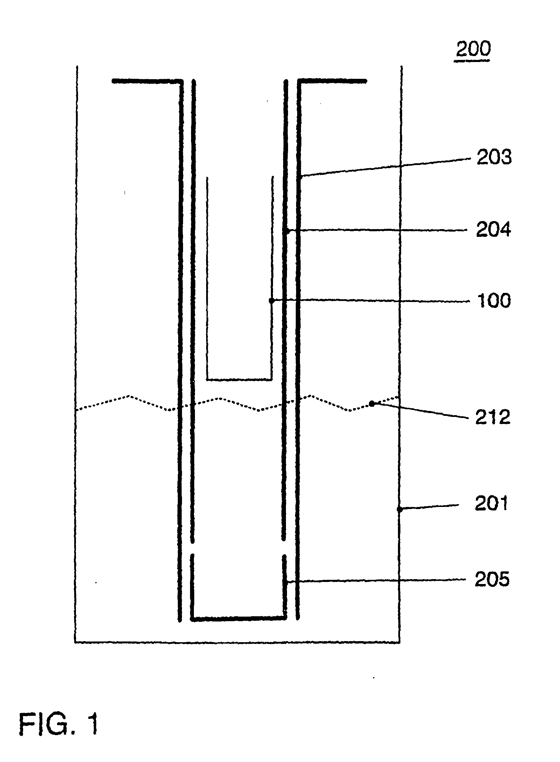

In Fig. 1 ist die elektronische Meßvorrichtung in einer ersten Ausführungsform dargestellt. Sie umfaßt eine Meßsonde, die allgemein mit 200 bezeichnet ist, und eine Meßelektronik 100, die in der dargestellten Ausführungsform in der Meßsonde 200 integriert ist.

Die Meßsonde ist an einer Wand eines Tanks 201 für die Flüssigkeit befestigt. Sie ragt in den Tank, so daß sie wenigstens teilweise mit Flüssigkeit bedeckt ist. Die Flüssigkeitsoberfläche ist mit 212 bezeichnet. Die Meßsonde umfaßt eine Elektrode 203. Diese dient als Gegenelektrode für eine Meßelektrode 204 und eine Referenzelektrode 205. Vorzugsweise sind die Elektroden röhrenförmig ausgebildet. Mit anderen Worten, die Meßsonde besteht aus zwei ineinander gesteckten, voneinander isolierten Rohren 204 bzw. 205 einerseits und 203 andererseits. Das Innenrohr besteht aus den zwei isolierten Teilrohren 204 und 205. Das Fußende ist in einem genauen Abstand zum Außenrohr fixiert. Das Innenrohr mit den Abschnitten 204 und 205 dient gleichzeitig zur Aufnahme der Elektronik 100.

Die Kapazität zwischen der Meßelektrode 204 und der Außenelektrode 203 und zwischen der Referenzelektrode 205 und der Außenelektrode 203 beeinflussen die Taktfrequenz jeweils eines Impulsgenerators in der Elektronik 100.

Im allgemeinen Fall wird - wie in Fig. 1 dargestellt - die Meßsonde wenigstens teilweise mit Flüssigkeit bedeckt sein. Die Anordnung der Meßelektrode 204 und der Referenzelektrode 205 zueinander und ihre Abmessungen sind so gewählt, daß die Referenzelektrode 205 immer mit Flüssigkeit (Kraftstoff) bedeckt ist. Dagegen ist i. a. die Meßelektrode 204 nur teilweise mit Treibstoff bedeckt. Im übrigen befindet sich Luft zwischen der Meßelektrode 204 und der Außenelektrode 203. Da Luft eine andere Dielektrizitätskonstante als Kraftstoff hat (und da die geometrischen Verhältnisse anders sind), ist die Kapazität zwischen der Meßelektrode 204 und der Außenelektrode 203 eine andere als bei der Referenzelektrode 205. Ferner ist die Größe der Kapazität der Meßelektrode 204 abhängig von der Füllhöhe im Tank 201.

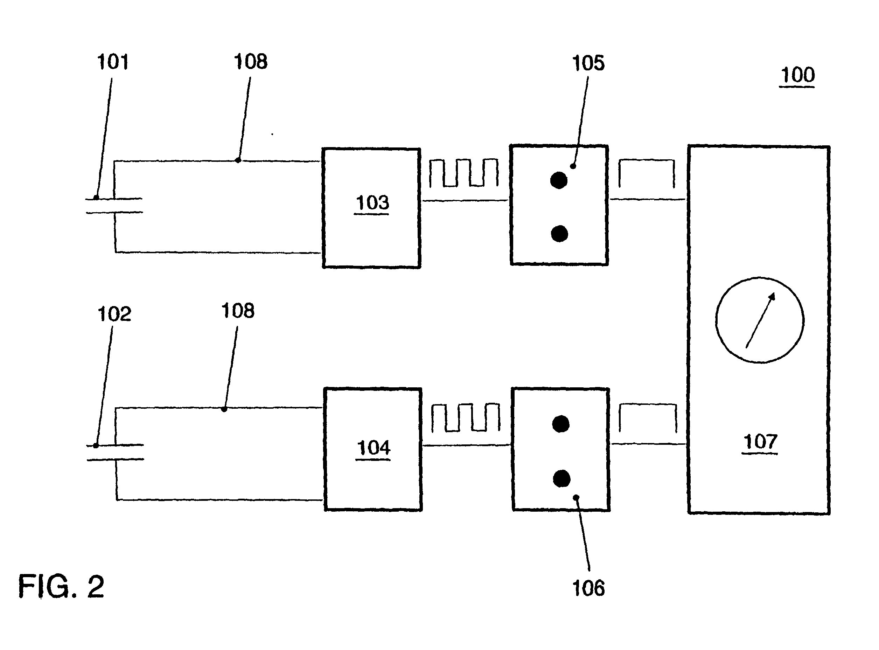

Da Kraftstoffe eine wesentlich kleinere Dielektrizitätskonstante als z.B. polare Flüssigkeiten (Wasser und Alkohol) haben und damit sich nicht sehr von der von Luft unterscheiden, muß die Kapazitätsänderung durch Kraftstoff anstelle von Luft in der Elektronik 100 aufbereitet werden. In Fig. 2 ist der Aufbau der Meßelektronik 100 dargestellt, mit der die Füllhöhe des Tanks 201 bestimmt wird. Die Meßelektronik 100 weist im wesentlichen zwei Zweige auf, nämlich einen Meßzweig und einen Referenzzweig.

Die Meßelektrode 204 mit der Außenelektrode 203 nach Fig. 1 ist in Fig. 2 als Teil des Meßzweiges schematisch dargestellt als ein Meßkondensator 101. Analog ist die Referenzelektrode 205 mit der Außenelektrode 203 als Teil des Referenzzweiges schematisch als ein Referenzkondensator 102 dargestellt. Der Meßkondensator 101 ist über ein erstes Übertragungskabel 108 mit einem Meßimpulsgenerator 103 verbunden. Der Referenzkondensator 102 ist über ein zweites Übertragungskabel 108 mit einem Referenzimpulsgenerator 104 verbunden.

Der Meßkondensator 101 bestimmt die Frequenz und/oder die Pulsform der Impulsfolge des Meßimpulsgenerators 103 in dem Meßzweig. Wenn der Meßkondensator 101 in die zu messende Flüssigkeit eingetaucht ist, so wird in dem Meßimpulsgenerator 103 eine Impulsfolge mit einer Frequenz im Bereich von 1 bis 10 MHz erzeugt. Vorzugsweise ist die Pulsform so gewählt, daß ein Puls die halbe Periodenlänge ausfüllt. Es ist aber auch möglich, daß ein Puls nur eine sehr kurze Zeit von Null verschieden ist und dann wieder auf Null abfällt, d. h. nur einen kleinen Anteil der Periodendauer ausfüllt (kleiner duty cycle). Da die Frequenz von 1 bis 10 MHz für die Verarbeitung durch eine Auswerteelektronik sehr hoch ist und die Übertragung von Signalen mit dieser Frequenz in einem Fahrzeug Schwierigkeiten mit sich bringt - z. B. weil andere Fahrzeugkomponenten wie Zündung und Mobiltelefone in diesem Frequenzbereich Strahlung emittieren - wird das Signal von dem Impulsgenerator 103 in einem ersten Frequenzteiler 105 auf eine handhabbare Frequenz von z. B. zwischen 500 Hz und 5 kHz geteilt. Vorzugsweise teilt der Frequenzteiler 105 die Frequenz des Signals vom Impulsgenerator auf ein 2048-stel.

Das Signal von dem Frequenzteiler 105 wird an eine zentrale Steuereinheit 107 weitergeleitet. Diese Steuereinheit 107 umfaßt u. a. eine (nicht dargestellte) Anzeigevorrichtung zur Anzeige des Füllstandes und des Verbrauchs an Treibstoff (zeitliche Ableitung des Flüssigkeitspegels).

Der Referenzzweig der Meßelektronik ist auf die gleiche Art wie der Meßzweig aufgebaut, wobei ein Referenzimpulsgenerator mit 104 und ein zweiter Frequenzteiler mit 106 bezeichnet ist.

Das Funktionsprinzip der erfindungsgemäßen Anordnung nach Fig. 2 ist das folgende. Dadurch, daß die Referenzelektrode 205 immer mit Treibstoff bedeckt ist, wird sichergestellt, daß die Taktfrequenz f1 und/oder die Pulsform T1 des ihr zugeordneten Referenzimpulsgenerators 103 konstant bleibt. Sowohl Frequenz als auch Pulsform sind nur abhängig von der Temperatur im Tank und von den elektrischen Eigenschaften des Treibstoffes im Tank.

Die Meßelektrode 204 ist nur teilweise mit Treibstoff bedeckt. Im übrigen befindet sich Luft zwischen der Meßelektrode 204 und der Außenelektrode 203. Da Luft eine andere Dielektrizitätskonstante als Kraftstoff hat (und da die geometrischen Verhältnisse bei Referenzelektrode und Meßelektrode anders sind), ist die Kapazität zwischen der Meßelektrode 204 und der Außenelektrode 203 eine andere als bei der Referenzelektrode 205. Damit unterscheidet sich bei dem Meßimpulsgenerator 103, der gleich aufgebaut ist wie der Referenzimpulsgenerator 104, die Signalfrequenz f2 und/oder die Pulsform T2 von der Signalfrequenz f1 und/oder der Pulsform T1 der Referenzelektrode 205. Bei steigendem oder sinkendem Flüssigkeitspegel 212 im Tank ändert sich die Kapazität der Anordnung und damit die Frequenz und/oder die Pulsform in dem Meßzweig gegenüber der Frequenz und/oder Pulsform in dem Referenzzweig.

Die Änderung der Frequenzen und Pulsformen der Signale von den Impulsgeneratoren 103 und 104 bzw. von den Frequenzteilern 105 und 106 wird in der zentralen Steuereinheit 107 registriert. Insbesondere wird das Verhältnis beider Frequenzen von dem Meßzweig und dem Referenzzweig gebildet. Dieses Verhältnis gibt dann das Verhältnis zwischen der Meß- und der Referenzkapazität 101 und 102 an und ist damit ein direktes Maß für die Füllhöhe des Tanks.

Im einzelnen ergibt sich die Füllhöhe des Tanks aus dem Verhältnis der Meß- und der Referenzfrequenz bzw. der Meß- und der Referenzkapazität dadurch, daß aus den bekannten Abmessungen der Referenzkapazität die (temperaturabhängige) Dielektrizitätskonstante der Flüssigkeit errechnet wird und ins Verhältnis gesetzt wird zu der gesamten, aus Luftanteil und Flüssigkeitsanteil zusammengesetzten Dielektrizitätskonstanten der Meßkapazität. (Dabei werden wiederum die bekannten geometrischen Abmessungen der Meßkapazität zugrunde gelegt.) Eine Vorgabe der Dielektrizitätskonstanten der Flüssigkeit vorab ist nicht mehr nötig. Auch unterschiedliche Qualitäten des Treibstoffes und damit unterschiedliche Werte der Dielektrizitätskonstanten des Treibstoffes aufgrund von Zusätzen, Verunreinigungen und der Kraftstofftemperatur spielen keine Rolle mehr.

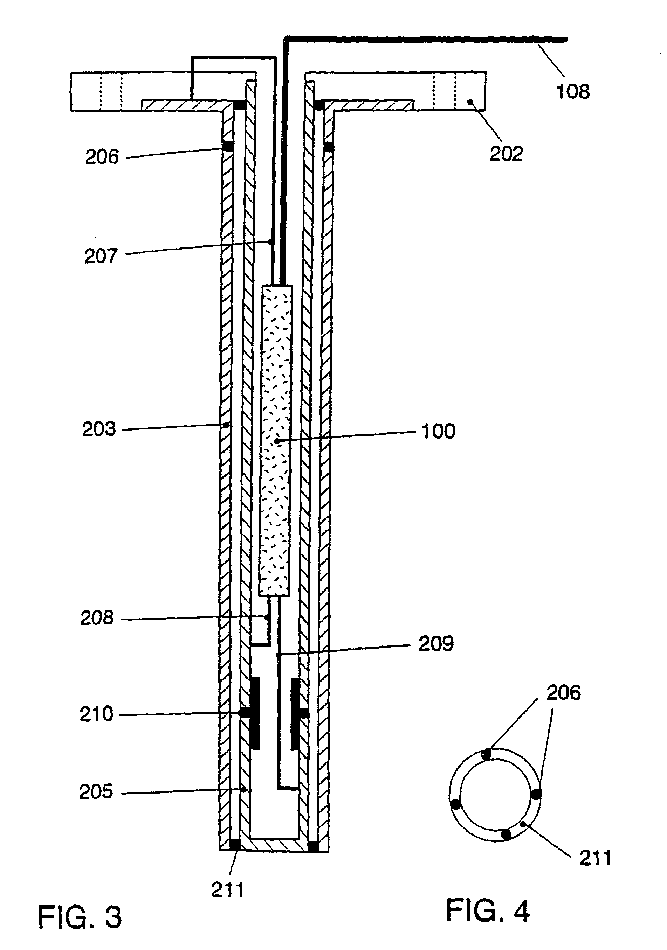

Zur genauen Bestimmung der Dielektrizitätskonstanten des Kraftstoffes müssen die geometrischen Abmessungen der Meßsonde bekannt sein. Die Meßsonde nach Fig. 1 ist im einzelnen in Fig. 3 dargestellt. Die Meßsonde ist mit einem Befestigungsflansch 202 an dem Tank 201 befestigt. Der Befestigungsflansch 202 kann an der Tankwand angeklebt, angeschraubt oder mit dieser einstückig verbunden sein. Die Meßsonde besteht im wesentlichen aus dem Außenrohr 203, dem Meßrohr 204 und dem Referenzrohr 205. Die Länge der Meßsonde 200 wird vorzugsweise so gewählt, daß ihr dem Befestigungsflansch 202 gegenüberliegendes Ende sich in unmittelbarer Nähe zu einer tief gelegenen Stelle im Tank befindet.

Vorzugsweise sind alle drei Elektroden 203, 204 und 205 rohrförmig ausgebildet und konzentrisch um bzw. nebeneinander auf einer Achse angeordnet. Das Meß- und das Referenzrohr 204 und 205 haben in der dargestellten Ausführungsform den gleichen Querschnitt. Sie werden getrennt durch eine Isolierung 210, die die beiden Rohre sowohl mechanisch miteinander verbindet als auch elektrisch voneinander isoliert. Vorzugsweise besteht die Isolierung 210 aus einem elektrisch nicht-leitenden Material, wie Kunststoff oder Teflon etc.. In der Fig. ist der Übersichtlichkeit wegen nur eine Isolierung am Fußende der Meßsonde dargestellt; selbstverständlich können aber zur Stabilisierung der Meßsonde weitere Isolierungen 210 über die Rohre verteilt vorgesehen werden.

Damit ein ungehindertes Auffüllen des Zwischenraumes zwischen Meß- und Referenzrohr 204 bzw. 205 einerseits und Außenrohr 203 andererseits möglich ist, sind Eintrittsöffnungen oder Bohrungen 206 sowohl in den Rohren 203, 204 und 205 selbst als auch in dem Abstandshalter 211 vorgesehen. Die Bohrungen dienen einerseits als Öffnungen für die Flüssigkeit, andererseits (am oberen Ende der Meßsonde) als Belüftungsöffnungen, durch die Luft zwischen den Rohren entweichen kann und so die Flüssigkeit aus den Zwischenräumen nicht herausdrängt und ein verfälschtes Meßergebnis zur Folge hat.

Die Bohrungen 206 in dem Abstandshalter 211 sind in Fig. 4 im einzelnen dargestellt. Der Abstandsring in der gezeigten Ausführungsform ist im wesentlichen ein Ring aus Teflon oder anderen für Kraftstoff geeigneten Materialien, in dem in regelmäßigen Abständen senkrecht zu der Ringebene die Bohrungen 206 für die Flüssigkeit bzw. auch für das Entweichen von Luft vorgesehen sind. In einer weiteren (nicht dargestellten) Ausführung der Meßsonde ist der Abstandshalter kein durchgehender Ring, sondern ist zusammengesetzt aus mehreren Segmenten mit Zwischenabständen.

Innerhalb der Meßsonde befinden sich eine Anschlußleitung 207 für das Außenrohr mit der Elektronik 100, eine Anschlußleitung 208 für das Meßrohr mit der Elektronik 100 und eine Anschlußleitung 209 für das Referenzrohr mit der Elektronik 100. Die Elektronik 100 ihrerseits wird über das Übertragungskabel 108 mit der Steuereinheit 107 verbunden. Die Kabel verlaufen somit alle innerhalb der Meßsonde und sind damit gegen mechanische Beanspruchung z. B. beim Füllen des Tanks oder Beschädigungen geschützt.

Die Länge der Meßsonde 200 ist so gewählt, daß der tiefste Punkt in dem Tank 201 erreicht wird und so sichergestellt ist, daß der Füllstand des Tanks auch bei wenig Kraftstoff noch zuverlässig ermittelt werden kann. Dazu können (nicht dargestellte) Wandelemente in den Tank eingebaut werden, die verhindern, daß aufgrund von Querbeschleunigungen der Kraftstoff kurzzeitig aus dem Bereich der Meßsonde abfließt.

In einer besonders bevorzugten Ausführungsform der Erfindung sind die beiden Impulsgeneratoren 103 und 104 astabile Multivibratoren, deren eine Kapazität durch die Meß- bzw. Referenzkapazität 101 und 102 gebildet wird. Die Periodenzeit des astabilen Multivibrators in dem Meßzweig wird durch die Füllhöhe des Kraftstoffes und der dadurch resultierenden linearen Kapazitätsänderung bestimmt. Die Periodenzeiten der Multivibratoren wird durch den jeweils nachgeschalteten Frequenzteiler 105 und 106 vergrößert, so daß die Übertragung der Impulsfolgen zur zentralen Steuereinheit 107 in einem optimalen Frequenzband erfolgen kann. Die Signale werden an die Steuereinheit 107 weitergeleitet, die in dieser besonders bevorzugten Ausführungsform in dem Mikrocomputer einer zentralen Bedien- und Anzeigeeinheit im Fahrzeug implementiert ist. Ein solcher Mikrocomputer ist in der Regel nicht vollständig ausgelastet, so daß er zusätzliche Aufgaben im Rahmen einer Kombiinstrumentanzeige erledigen kann. Der Mikrocomputer arbeitet ein vorher abgespeichertes Programm zur Berechnung des Füllstandes ab. Dabei wertet er in der besonders bevorzugten Ausführungsform der Erfindung die Pulsbreiten der Impulsfolgen aus. Bei der Tankanzeige kann neben der reinen Füllstandsanzeige auch eine Verbrauchsanzeige integriert sein, bei der für Kurvenfahrten eine vorgegebene Dämpfung eingegeben ist. Die erfindungsgemäße Meßvorrichtung stellt ein eigenständig kompensierendes System dar, das auch eine Plausibilitätskontrolle in bezug auf Kraftsoffverbrauch (Erkennung und Unterscheidung von Kurvenfahrt, Leck im Tank etc.) ermöglicht.

Die Übertragung des Meßwertes zwischen dem Frequenzteiler 105 und 106 und der zentralen Steuereinheit 107 kann besonders einfach über einen fahrzeuginternen Bus erfolgen, wie z. B. einen sogenannten Controller Area Network Bus (CAN).

Die Erfindung wurde in Form von bevorzugten Ausführungsformen beschrieben. Es sind viele Abwandlungen der speziellen Ausführungsformen denkbar. So kann z. B. das Außenrohr 203 der Meßsonde mit dem Tankgehäuse 201 zusammenfallen. Dadurch hätte man ein Bauteil eingespart, müßte aber die Meßsonde bzw. die Elektronik auf den Tank speziell kalibrieren. Ebenso ist es denkbar, die Meßsonde nicht in Form von konzentrischen Rohren aufzubauen, sondern Platten zu verwenden. Es sind weitere Änderungen an dem geometrischen Aufbau der Meßsonde denkbar, ohne von dem Prinzip der Erfindung abzuweichen.

### BEZUGSZEICHENLISTE

- 100: Meßelektronik
- 101: Meßkondensator
- 102: Referenzkondensator
- 103: Meßimpulsgenerator
- 104: Referenzimpulsgenerator
- 105: erster Frequenzteiler
- 106: zweiter Frequenzteiler
- 107: zentrale Steuereinheit
- 108: Übertragungskabel
- 200: Meßsonde
- 201: Tank
- 202: Befestigungsflansch
- 203: Außenrohr
- 204: Meßrohr
- 205: Referenzrohr
- 206: Bohrungen
- 207: Anschlußleitung Außenrohr
- 208: Anschlußleitung Meßrohr
- 209: Anschlußleitung Referenzrohr
- 210: Isolierung
- 211: Abstandshalter
- 212: Flüssigkeitsoberfläche im Tank

## Patentansprüche

1. Meßvorrichtung zum Messen der Füllhöhe in einem Tank, wobei die Messvorrichtung eine Meßsonde (200) mit einer Meßkapazität (203, 204) und einer Referenzkapazität (203, 205) und eine mit der Meßsonde (200) verbundene Meßelektronik (100, 107) zum Ausgeben eines Füllhöhensignals, das der Füllhöhe in dem Tank entspricht, umfaßt, und
wobei die Meßelektronik (100) einen ersten Impulsgenerator (103) zum Ausgeben einer Meßimpulsfolge in Abhängigkeit von der Meßkapazität (203, 204) und einen zweiten Impulsgenerator (104) zum Ausgeben einer Referenzimpulsfolge in Abhängigkeit von der Referenzkapazität (203, 205) umfasst,
**dadurch gekennzeichnet, dass**
die Meßelektronik (100) mit dem ersten Impulsgenerator (103) und dem zweiten Impulsgenerator (104) in die Meßsonde (200) integriert ist.

2. Meßvorrichtung nach Anspruch 1, **dadurch gekennzeichnet, daß** der Impulsgenerator (103, 104) einen astabilen Multivibrator umfaßt, dessen Zeitkonstante durch die externe Kapazität (203, 204; 203, 25) gegeben ist.

3. Meßvorrichtung nach einem der vorangehenden Ansprüche, **dadurch gekennzeichnet, daß** die Meßelektronik (100, 107) eine zentrale Steuereinheit (107) zum Vergleichen der Meßimpulsfolge und der Referenzimpulsfolge und zum Ausgeben eines Anzeigesignals umfaßt.

4. Meßvorrichtung nach einem der vorangehenden Ansprüche, **dadurch gekennzeichnet, daß** die Impulsfolge aus dem Impulsgenerator (103; 104) in einen Frequenzteiler (105; 106) eingespeist wird, der zwischen dem Impulsgenerator (103; 104) und der zentralen Steuereinheit (107) angeordnet ist

5. Meßvorrichtung nach einem der vorangehenden Ansprüche, **dadurch gekennzeichnet, daß** die Meßsonde (200) zwei erste, auf derselben Achse angeordnete Rohre (204, 205) als jeweils eine Elektrode und ein Außenrohr (203), das konzentrisch mit den beiden ersten Rohren angeordnet ist, als Gegenelektrode umfaßt.

## Claims

1. Measuring device for measuring the filling level in a tank, the measuring device comprising a measurement probe (200) having a measurement capacitance (203, 204) and a reference capacitance (203, 205) and comprising measurement electronics (100, 107), which are connected to the measurement probe (200) and are intended for outputting a filling level signal corresponding to the filling level in the tank, and
the measurement electronics (100) comprising a first pulse generator (103) for outputting a measurement pulse sequence in a manner dependent on the measurement capacitance (203, 204) and comprising a second pulse generator (104) for outputting a reference pulse sequence in a manner dependent on the reference capacitance (203, 205),
**characterized in that**
the measurement electronics (100) having the first pulse generator (103) and the second pulse generator (104) are integrated in the measurement probe (200).

2. Measuring device according to Claim 1, **characterized in that** the pulse generator (103, 104) comprises an astable multivibrator, the time constant of which is given by the external capacitance (203, 204; 203, 205).

3. Measuring device according to one of the preceding claims, **characterized in that** the measurement electronics (100, 107) comprise a central control unit (107) for comparing the measurement pulse sequence and the reference pulse sequence and for outputting an indication signal.

4. Measuring device according to one of the preceding claims, **characterized in that** the pulse sequence from the pulse generator (103; 104) is fed to a frequency divider (105; 106), which is arranged between the pulse generator (103; 104) and the central control unit (107).

5. Measuring device according to one of the preceding claims, **characterized in that** the measurement probe (200) comprises two first tubes (arranged on the same axis) (204, 205) as a respective electrode and comprises an outer tube (203), which is arranged concentrically with the two first tubes, as counterelectrode.

## Revendications

1. Dispositif de mesure pour mesurer le niveau dans un réservoir, le dispositif de mesure comprenant une sonde de mesure (200) munie d'un condensateur de mesure (203, 204) et d'un condensateur de référence (203, 205) et d'un circuit électronique de mesure (100, 107) relié à la sonde de mesure (200) pour délivrer un signal de niveau qui correspond au niveau dans le réservoir, et le circuit électronique de mesure (100) comprenant un premier générateur d'impulsions (103) pour délivrer une série d'impulsions de mesure en fonction du condensateur de mesure (203, 204) et un deuxième générateur d'impulsions (104) pour délivrer une série d'impulsions de référence en fonction du condensateur de référence (203, 205), **caractérisé en ce que** le circuit électronique de mesure (100) est intégré dans la sonde de mesure (200) avec le premier générateur d'impulsions (103) et le deuxième générateur d'impulsions (104).

2. Dispositif de mesure selon la revendication 1, **caractérisé en ce que** le générateur d'impulsions (103, 104) comprend un multivibrateur astable dont la constante de temps est définie par le condensateur externe (203, 204 ; 203, 25).

3. Dispositif de mesure selon l'une des revendications précédentes, **caractérisé en ce que** le circuit électronique de mesure (100, 107) comprend une unité de commande centrale (107) pour comparer la série d'impulsions de mesure et la série d'impulsions de référence et pour délivrer un signal d'affichage.

4. Dispositif de mesure selon l'une des revendications précédentes, **caractérisé en ce que** la série d'impulsions en provenance du générateur d'impulsions (103 ; 104) est injectée dans un diviseur de fréquence (105 ; 106) qui est disposé entre le générateur d'impulsions (103 ; 104) et l'unité de commande centrale (107).

5. Dispositif de mesure selon l'une des revendications précédentes, **caractérisé en ce que** la sonde de mesure (200) comprend deux premiers tubes (204, 205) disposés sur le même axe et faisant chacun office d'électrode et un tube extérieur (203) disposé de manière concentrique par rapport aux deux premiers tubes et faisant office d'électrode opposée.
